# EUROPÄISCHE PATENTANMELDUNG

(11) **EP 1 187 443 A1**
(43) Veröffentlichungstag der Anmeldung: **13.03.2002**
(21) Anmeldenummer: 00119821.7
(22) Anmeldetag: 12.09.2000
(51) Int. Cl.: H04M 7/00, H04M 15/00, H04L 12/28, H04L 12/14

(54) **Verfahren und System zur telekommunikativen Lieferung von über das Internet angeforderten kostenverursachenden Diensten**

(71) Anmelder: Ziegler, Peter, Dr., 84098 Hohenthann (DE)
(72) Erfinder: Ziegler, Peter, Dr., 84098 Hohenthann (DE)
(74) Vertreter: Riederer Freiherr von Paar zu Schönau, Anton

(57) **Zusammenfassung**

Es werden ein Verfahren und System zur telekommunikativen Lieferung von über das Internet angeforderten und separat abgerechneten Diensten durch einen Dienste-Erbringer, oder einen dem Dienste-Erbringer assoziierten, eine Internetseite anbietenden Anbieter beschrieben, mit der Möglichkeit der Identifizierung des anfordernden Teilnehmers durch den Dienste-Erbringer und der automatischen Abrechnung nach einem individuellen Tarif, wobei dem Teilnehmer zur Verfügung stehen: eine Datenverarbeitungs- und Telekommunikationseinheit mit einem Programmspeicher, in den ein Datenverarbeitungsprogramm einlesbar ist, sowie von dieser Datenverarbeitungs- und Telekommunikationseinheit ausgehende stehende oder durchschaltbare Verbindungen einerseits zu einem Internet-Server und andererseits zu einem Telekommunikations-Netzknoten, dem eine Tarifspeicher- und -rechenanlage zugeordnet ist, wobei das einlesbare Datenverarbeitungsprogramm: 1. im Speicher von an der Teilnahme berechtigten Internetseiten-Anbietern oder von diesen beauftragten Programmservicezentren gespeichert ist, 2. es die Verbindungsdaten der vom Teilnehmer über den Netzknoten zum Erbringer des angeforderten Dienstes herzustellenden Verbindung mit Abrechnungsautomatik enthält, 3. es durch Internet-Abruf vorübergehend in den Speicher des Teilnehmers ladbar ist, 4. es sich nach dem Laden sofort aktiviert und sich nach Beendigung seiner Funktion im Speicher des Teilnehmers selbst wieder löscht, und 5. auf entsprechenden Befehl hin die bestehende Verbindung zum Internet-Server löst und eine Verbindung mit Abrechnungsautomatik über den Telekommunikations-Netzknoten zum Erbringer des angeforderten Dienstes herstellt. Die dem Netzknoten zugeordnete Tarifspeicher- und -rechenanlage wird durch die Verbindungsdaten der Verbindung mit Abrechnungsautomatik adressiert und wendet nach der Errichtung der Verbindung mit Abrechnungsautomatik einen vom jeweiligen Dienste-Erbringer vorgegebenen Abrechnungstarif mit Vorgabe des Zahlungspflichtigen - Teilnehmer und/- oder Anbieter - an.

## Beschreibung

Die Erfindung bezieht sich auf ein Verfahren zur telekommunikativen Lieferung von über das Internet angeforderten kostenverursachenden Diensten durch einen Dienste-Erbringer oder einen dem Dienste-Erbringer assoziierten, eine Internetseite anbietenden Anbieter unter Identifizierung des anfordernden Teilnehmers durch den Dienste-Erbringer und individueller Abrechnung. Dem Teilnehmer stehen eine Datenverarbeitungs- und Telekommunikationseinheit mit einem Programmsspeicher sowie, von dieser Einheit ausgehend, stehende oder durchschaltbare Verbindungen zu einem Internet-Server und zu einem Telekommunikations-Netzknoten zur Verfügung, und der Netzknoten verfügt über eine durch Signalisierungen der durchgeleiteten Verbindungen ansteuerbare Tarifspeicher- und -rechenanlage. Im Rahmen des erfindungsgemäßen Verfahrens liest man in den Programmspeicher des Teilnehmers ein Datenverarbeitungsprogramm ein, das auf einen entsprechenden Befehl hin eine bestehende Verbindung zum Internet-Server löst und eine Verbindung mit Abrechnungsautomatik über den Telekommunikations-Netzknoten zum Erbringer des angeforderten Dienstes herstellt. Die Erfindung bezieht sich auch auf ein System, mit dem das Verfahren durchführbar ist.

Spezielle über das Internet anforderbare Dienste müssen gesondert bezahlt werden. Hierzu können gehören z. B.: das Herunterladen von Musikdateien über das Internet, die kurzzeitige Zurverfügungstellung von Programmen für bestimmte Arbeiten, Hilfs- und Auskunftsfunktionen unter Inanspruchnahme einer lebenden Person.

Der Teilnehmer, der ins Internet geht, hat zunächst eine 1 : 1-Verbindung zum Internet-Server, der dann die Verbindung zu einem Internetseiten-Anbieter als 1 : n-Verbindung herstellt. Der Anbieter hat keinerlei Möglichkeit, den Pfad zum Teilnehmer zu verfolgen oder den Teilnehmer anderweitig zu identifizieren. Der Teilnehmer kann zwar eine Kreditkartennummer durchgeben, ist aber im Fall einer fehlerhaften Durchgabe dann nicht mehr zu ermitteln. Für Kleinbeträge ist die Kreditkarte ohnehin kein brauchbares Zahlungsmittel.

Es ist ein System bekannt (NET900), das verwendbar ist, wenn der betreffende Teilnehmer das zugehörige eingangs genannte Programm bei sich eingespeichert hat. Mit Hilfe dieses bekannten Programms wird die Verbindung des Teilnehmers zum Internet-Server aufgetrennt und automatisch eine Kostenzuteilungs-Nummer gewählt, wie sie beispielsweise von der Deutschen Telekom als 900er-Nummer angeboten wird. Dieser Nummer können verschiedene Tarifstufen zugeteilt werden, und durch die Nummer wird eine neue Verbindung zu einem anderen Server hergestellt. Über diesen Server wird dann der kostenpflichtige Dienst erbracht und aufgrund der Kostenfunktion der Nummer wird der Teilnehmer dann über seine Fernsprechrechnung mit den Kosten entsprechend dem ausgewählten Tarif belastet.

Diese bekannte Möglichkeit ist jedoch noch wesentlichen Beschränkungen unterworfen. Der Dienste-Erbringer kann nicht einen beliebigen Tarif vorschreiben, sondern muß unter den für die betreffenden Nummern vorgesehenen Tarifstufen wählen. Die automatisch gewählte Nummer führt zu einem speziellen Server mit Abrechnungsautomatik, der jedoch erst geschaffen werden muß. Das Verfahren kann nur der Teilnehmer in Anspruch nehmen, dessen Installation über das benötigte Programm verfügt.

Demgegenüber soll durch die Erfindung eine beliebige Tarifstruktur und die Verbindung zu einer beliebigen Telefonnummer ermöglicht werden, was durch jeden Teilnehmer ohne spezielle Installationen möglich sein soll.

Dies wird gemäß der Erfindung dadurch erreicht, daß für den Internetseiten-Anbieter in der Tarifspeicher- und -rechenanlage an Speicherstellen, die gegebenen Tarifsignalisierungen zugeordnet sind, individuelle Tarifdaten gespeichert worden sind; daß der Internetseiten-Anbieter auf die Anforderung des Dienstes hin über die bestehende Internetverbindung in den Programmspeicher des Teilnehmers Daten überträgt, die einen über jenen Telekommunikations-Netzknoten verlaufenden Telekommunikations-Pfad zum Dienste-Erbringer oder zum Internetseiten-Anbieter mit Hilfe einer diesem Erbringer oder Anbieter zugeordneten Wegeleitsignalisierung identifizieren, der jeweils eine gegebene Tarifsignalisierungen zum Adressieren der Tarifspeicher- und -rechenanlage zugeordnet ist; daß das Programm die Anwahl dieses Erbringers oder Anbieters und der ihm zugeordneten Speicherstellen in der Tarifspeicher- und -rechenanlage durch das Senden der gegebenen Signalisierungen durchführt; und daß die Tarifspeicher- und -rechenanlage aufgrund der dem Telekommunikations-Netzknoten zugegangenen Tarifsignalisierung die einem oder mehreren Kostenschuldnern zu berechnende Belastung ermittelt.

Ein zweckmäßiges System, mit dem das Verfahren durchführbar ist, umfaßt beim Teilnehmer eine Datenverarbeitungs- und Telekommunikationseinheit mit einem Programmspeicher, in den ein Datenverarbeitungsprogramm einlesbar ist, sowie von dieser Datenverarbeitungs- und Telekommunikationseinheit ausgehende stehende oder durchschaltbare Verbindungen einerseits zu einem Internet-Server und andererseits zu einem Telekommunikations-Netzknoten, dem eine Tarifspeicher- und -rechenanlage zugeordnet ist, wobei das einlesbare Datenverarbeitungsprogramm auf entsprechenden Befehl hin eine bestehende Verbindung zum Internet-Server löst und eine Verbindung mit Abrechnungsautomatik über den Telekommunikations-Netzknoten zum Erbringer des angeforderten Dienstes herstellt, und ist gemäß der Erfindung dadurch gekennzeichnet, daß das Programm: 1. im Speicher von an der Teilnahme berechtigten Internetseiten-Anbietern oder von diesen beauftragten Programmservicezentren gespeichert ist, 2. es die Verbindungsdaten der vom Teilnehmer über den Netzknoten zum Erbringer des angeforderten Dienstes herzustellenden Verbindung mit Abrechnungsautomatik enthält, 3. es durch Internet-Abruf vorübergehend in den Speicher des Teilnehmers ladbar ist, und 4. es ein nach dem Laden sich sofort aktivierendes und dadurch jene Verbindung herstellendes Programm ist, das sich nach Beendigung der Verbindung im Speicher des Teilnehmers selbst wieder löscht; und daß die dem Netzknoten zugeordnete Tarifspeicher- und -rechenanlage durch die Verbindungsdaten der Verbindung mit Abrechnungsautomatik adressierbar ist und dazu programmiert ist, nach der Errichtung der Verbindung mit Abrechnungsautomatik einen vom jeweiligen Dienste-Erbringer vorgegebenen Abrechnungstarif mit Vorgabe des Zahlungspflichtigen - Teilnehmer und/oder Anbieter - anzuwenden.

Das Verfahren sieht, kurz dargestellt, so aus, daß auf die Anforderung des kostenpflichtigen Dienstes hin die Nummer des Dienste-Erbringers in die Einrichtung des Teilnehmers hineingeschossen wird, dessen Einrichtung, nachdem sie die Verbindung mit dem bisherigen Server aufgetrennt hat, unverzüglich diese Nummer wählt, und zwar einschließlich der Netzanbieter-Vorwahl des Netzbetreibers, in dessen Tarifspeicher- und -rechenanlage der Dienste-Anbieter seine Tarifbedingungen gespeichert hat. Solche Tarifspeicher- und -rechenanlagen sind an allen üblichen Telekommunikations-Netzknoten vorhanden, um Ferngespräche über verschiedene Entfernungen, in verschiede Länder, zu verschiedenen Tageszeiten usw. nach unterschiedlichen Tarifen zu belasten. Der Dienste-Anbieter, der mit dem Netzbetreiber einen Vertrag geschlossen hat, kann eine Berechnung der anfallenden Kosten nach Zeit oder nach Datenmengen, zu einem seiner Dienstleistung gerecht werdenden Entgelt vereinbaren, mit dem der Teilnehmer, der Dienste-Erbringer, ein Dritter oder auch mehrere Personen in vereinbartem und in den Speicher eingeschriebenem Verhältnis belastet werden. Zweckmäßigerweise ist, in an sich üblicher Weise, die Tarifsignalisierung und die Wegeleitsignalisierung die selbe Datenfolge, nämlich die Anwahlnummer des Dienste-Erbringers über den Telekommunikations-Netzknoten. Die Alternative, daß die Signalisierung eine Signalkette zur Tarifspeicher- und -rechenanlage und eine weitere Signalkette für die Wegedurchschaltung enthält, ist jedoch ebenfalls möglich.

Vorzugsweise sieht das Verfahren vor, daß das Programm durch einen Internet-Abruf, nämlich die Anforderung des Dienstes, nur vorübergehend in den Programmspeicher des Teilnehmers geladen wird, sich nach dem Laden sofort aktiviert und die Verbindung über den Netzknoten herstellt, und sich nach Beendigung der Verbindung über den Netzknoten zum Diensteerbringer wieder selbst im Programmspeicher des Teilnehmers löscht. Der Teilnehmer muß also über das Programm nicht schon in vorgespeicherter Form verfügen. Das Anfordern des Dienstes, also der Internet-Abruf, erfolgt vorzugsweise durch Anklicken eines gegebenen Schaltbereichs auf der Internetseite am Bildschirm. Hierdurch wird über die zunächst noch bestehende Internetverbindung eine Signalisierung zum Internetseiten-Anbieter gesendet, der daraufhin das Programm - oder gegebenenfalls nur die vom Programm zu wählende Nummer - an den Teilnehmer liefert, der nach dem Lösen der Internet-Verbindung vorzugsweise die Internetseite offline aufrechterhält und nach dem Lösen der Verbindung mit Abrechnungsautomatik wieder zur ursprünglichen Internetverbindung zurückschaltet. Diese Vorgänge gehen so schnell, daß der Teilnehmer den zweimaligen Wechsel der Verbindungsart gar nicht merkt.

Die Erfindung ermöglicht damit eine Umleitung des Rufs auf eine beliebige Anschlußnummer, die der Intemetseiten-Anbieter selbst oder ein anderer Diensteerbringer sein kann, und eine beliebige, vorher festgelegte Tarifierung dieser Verbindung. Der kostenverursachende Dienst kann, wenn die technische Ausstattung des Teilnehmers dies gestattet, eine Sprechverbindung zu einer Auskunftsperson oder Supportstelle sein, zu der - bei anderer technischer Ausstattung - auch eine Schreibverbindung (Chat-Verbindung) hergestellt werden kann. Es kann die Verbindung zu einem vorübergehend minutenweise in Anspruch genommenen Programm wie einem Buchhaltungsprogramm sein; oder es kann - wie schon angedeutet-das entgeltliche Übernehmen eines urheberrechtlich geschützten Werkes sein. Während es im letzteren Falle naheliegt, daß der Teilnehmer die gesamten Kosten zu tragen hat, kann beispielsweise im Fall der Hilfeleistung beispielsweise bei einer Reisebuchung per Internet eine Kostenaufteilung vorgesehen sein: die ersten x Minuten gehen zu Lasten des Diensteanbieters, die restliche Zeit zu Lasten des Teilnehmers.

Schließlich ist es auch möglich, insbesondere bei Diensten, die sehr hohe Kosten verursachen, nicht die Abrechnung über die Telefonrechnung zu wählen, sondern die Weiterschaltung davon abhängig zu machen, ob der Teilnehmer einer Abbuchung von seinem Bankkonto zustimmt. Eine Datenbank nimmt die Daten auf und prüft durch marktübliche Programme, ob es sich um stimmige Bankdaten handelt. Die Identifizierung des Teilnehmers ist durch die 1 : 1-Verbindung über den Netzknoten jedenfalls gegeben. Bei der Datenverarbeitungs- und Telekommunikationseinheit des Teilnehmers kann es sich um eine stationäre Installation handeln, jedoch auch um eine mobile Einheit, beispielsweise eine, die nach dem System UMTS arbeitet.

Im Programm oder auf der Internetseite kann vorgesehen sein, daß der Teilnehmer, bevor die Kosten zu laufen beginnen, auf seine Zahlungspflicht hingewiesen wird.

Weitere Einzelheiten, Vorteile und Weiterbildungen der Erfindung ergeben sich aus der folgenden Beschreibung eines bevorzugten Ausführungsbeispiels unter Bezugnahme auf die Zeichnung. Es zeigen:
- Fig. 1: auf dem Bildschirm eine Internetseite mit Reiseangeboten und einem Schaltbereich zur Anforderung von Hilfe und ergänzenden Auskünften;
- Fig. 2: die Internetseite von Fig. 1, jedoch nach Anforderung der Hilfe und Auskunft und mit Darstellung des hierdurch erreichten Gesprächspartners;
- Fig. 3: eine schematische Darstellung des Netzes, in dem das Verfahren durchgeführt wird.

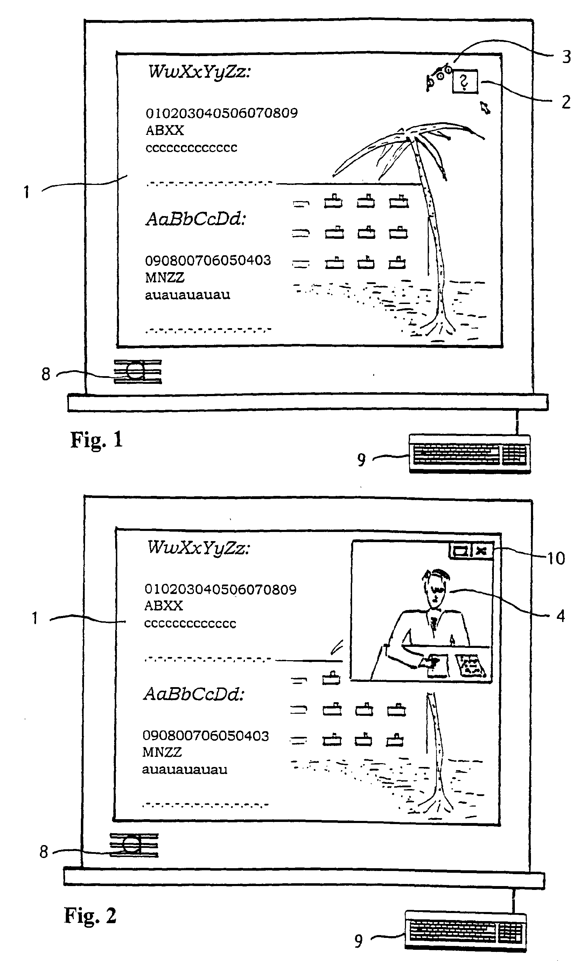

Es sei zunächst als Beispiel angenommen, daß ein Reiseveranstalter oder Reisevermittler eine Internetseite 1 mit seinen Angeboten anbietet. Mit Hilfe einer Schaltfläche oder eines Buttons 2 kann der interessierte Teilnehmer, der spezifische Rückfragen hat, auch einen persönlichen Kontakt herstellen, den sich der Anbieter, der in diesem Fall diesen Dienst erbringt, allerdings vergüten läßt, mindestens nach Ablauf einer zunächst zur Verfügung gestellten kurzen Gratisberatungszeit. Bei dem Button ist deshalb durch ein Kostensymbol 3 dargestellt, daß bei der Anwahl dieses Links Kosten entstehen oder zumindest entstehen können. Auf das Anklicken erscheint der angeforderte Dienst, beispielsweise der persönliche Berater 4, auf dem Bildschirm 1 (Fig. 2) und je nach technischer Ausstattung kann der Benützer durch eine Sprechverbindung über ein Mikrofon 8 oder durch eine Schreibverbindung (Chat) über eine Tastatur 9 seine Fragen eingeben, die der Berater 4 beantwortet. Dies geht so lange, bis einer von beiden die Verbindung wieder löst, wofür dem Teilnehmer ein Button 10 auf der Internetseite 1 zur Verfügung steht. Das Fenster mit dem Berater 4 verschwindet vom Bildschirm und die ursprüngliche Internetseite 1 ist wieder in voller Größe vorhanden, und der Teilnehmer kann durch Anwählen anderer Links weiterarbeiten.

Die geschilderte Anwendung ist ersichtlich nur ein Beispiel. Als weitere Beispiele kommen in Frage ein Diensteerbringer wie eine Fernschule für Sprachkurse oder ein Beratungszentrum, deren Dienste beispielsweise nach Zeit dem Teilnehmer in Rechnung gestellt werden, ohne Fahrplan- und Flugplaninformationen, bei denen der betreffende Transportdienst die Kosten übernimmt. Soweit der Teilnehmer belastet wird, geschieht dies zweckmäßigerweise schließlich über seine Telefonrechnung.

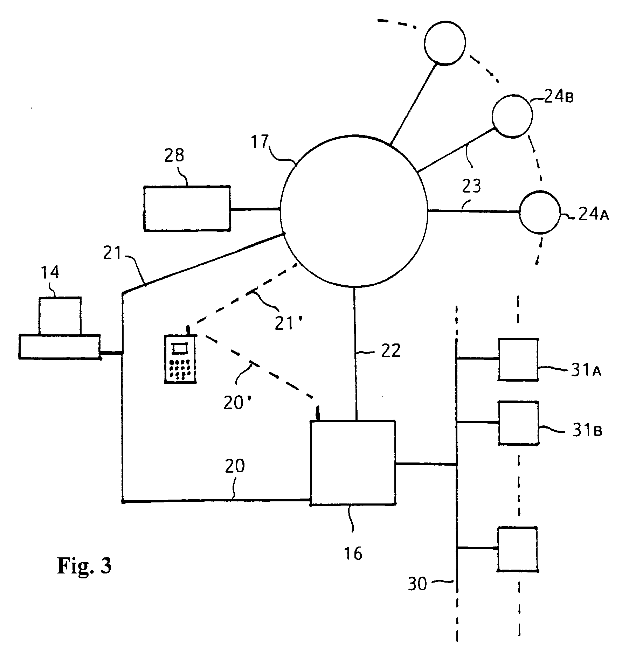

Der Durchführung dieser Vermittlung und Abrechnung kostenpflichtiger Dienste dienen ein Verfahren bzw. ein Programm in einer in Fig. 3 dargestellten Installation.

Fig. 3 zeigt symbolisch für den Teilnehmer oder Nutzer dessen Gerätschaft, nämlich eine Datenverarbeitungs- und Telekommunikationseinheit; es kann dies ein Rechner 14 oder ein Mobiltelefon 15, beispielsweise ein UMTS-Gerät, sein, jeweils sowohl mit einer Verbindungsschnittstelle zu einem HTTP-Server 16 zur Einwahl ins Internet und zu einem Telekommunikations-Netzknoten 17 eines gegebenen Netzbetreibers. Die entsprechenden Verbindungen sind gemäß Fig. 3 mit 20, 20' bzw. 21, 21' bezeichnet. Auch der Netzknoten 17 verfügt über eine Verbindung, die mit 22 bezeichnet ist, zum HTTP-Server 16, außerdem über weitere Verbindungen 23 zu sonstigen Knoten oder Endstellen 24a, 24b, ..., die beispielsweise Applikationsserver sind, welche gegebene kostenpflichtig angebotene über Kabel ausführbare Dienste anbieten, wie Musik, Unterricht, Programmnutzung usw.

Mit dem Netzknoten 17 ist in üblicher Weise eine Kostendatenbank 28 verbunden, in der zu gegebenen, von den Wählnummern und von Tag und Stunde abhängigen Tarifen, die entsprechend vorgespeichert sind, die für den einzelnen Teilnehmer aufgelaufenen Kosten berechnet und gespeichert werden.

Der Server 16 schaltet die Verbindung 20 bzw. 20' durch ins freie Internet 30, und zwar gemäß den eingegebenen Internetadressen zu Internetseiten- und Dienste-Anbietern 31a, 31b, ...

Insoweit entspricht die Installation dem, was allgemein vorhanden ist.

Zur Durchführung der eingangs beschriebenen Abläufe ist zunächst Voraussetzung, daß beispielsweise der Anbieter 31a mit dem Netzbetreiber, zu dem der Netzknoten 17 und die Datenbank 28 gehören, einen Tarif vereinbart hat, gemäß dem die kostenpflichtige Diensterbringung sei es des Anbieters 31a selbst oder sei es der auf seine Anweisung hin angewählten Diensteerbringer an den Endstellen 24a, 24b, ... abzurechnen sind. Hierbei kann jeder beliebige Tarif vereinbart werden, also bei Zeittarifen jeder Zeittakt oder jede Minutengebühr oder bei einer Berechnung nach übertragener Informationsmenge jede Bytegebühr, außerdem kann vorgegeben werden, wem die Kosten zur Last fallen sollen und wem sie gutgeschrieben werden sollen. Ein Teil der erhobenen Beträge wird natürlich regelmäßig dem Netzbetreiber zukommen, der die Vermittlungs- und Durchleitungsdienste erbringt.

Klickt nun der Teilnehmer am Rechner 14 den Button 2 (Fig. 1) an, so laufen folgende Schritte ab:
1. Vom Anbieter 31a zum Rechner 14 wird ein Programm übertragen, das temporär in ein Verzeichnis installiert wird und nach diesem Installieren sofort aktiviert wird ("download and execute"). Das Programm enthält unter anderem die Identität des Anbieters 31a und eine Nummer, die entsprechend dem angeforderten Dienst anzuwählen ist.
2. Das Programm speichert die Daten der noch bestehenden Verbindung 20.
3. Das Programm stellt den Betrieb der Internetseite 1 und den "Browser", nämlich ein Programm zum grafischen Zugriff au das World Wide Web, auf dem Rechner 14 auf offline.
4. Die Verbindung 20 zum Server 16 wird getrennt.
5. Das Programm baut eine 1 : 1-Telekommunikationsverbindung, beispielsweise über das Festnetz, vom Rechner 14 zum Netzknoten 17 über die Verbindung 21 und weiter zur programmierten Endstelle 31a oder 24 über die Verbindung 22 bzw. 23 auf. Über die Verbindung 22 kann die Anrufnummer wiederum zurück zum Server 16 und über diesen zum Anbieter 31a gelegt werden, wodurch also die Verbindung 20 durch die Verbindungen 21, 22 ersetzt ist, jedoch als 1 : 1-Verbindung. Sind mehrere Netzbetreiber verfügbar, so ist mit Hilfe der passenden Vorwahl ("Call-by-Call-Anruf') derjenige Netzbetreiber und Netzknoten 17 zu wählen, bei dem der Anbieter 31a seine Tarif- und Abrechnungsvorgaben gespeichert hat. Die entsprechende Netzbetreibervorwahl ist in der Nummer enthalten, die wiederum im temporär geladenen Programm enthalten ist.
6. Auf dem Rechner 14 wird der Browser wieder aktiviert und die Internetseite 1 kann wieder online aufgebaut werden, speziell wenn über die Verbindungen 21, 22 wieder der Anbieter 31a, 31b, ... angewählt worden ist.
7. Nun erfolgt die Kommunikation, die von den technischen Gegebenheiten abhängt. Verfügt der Teilnehmer über ein Mikrofon, so kann eine Sprachverbindung aufgebaut werden, wenn nicht, ist eine Chatabwicklung möglich.
8. Durch die Verbindung über den Netzknoten werden für den betreffenden Vorgang folgende Daten gewonnen, die gespeichert werden: die Nummer des Teilnehmers, die Nummer des Angerufenen, und je nach Installation die Zeit der Verbindung oder die Menge der übertragenen Informationen.
9. Es werden die Kosten der Verbindung über 21, 22, 23 ermittelt. Mit der Nummer des Angerufenen ist nämlich ein Tarif verbunden, der in der Kostendatenbank 28 registriert ist. Für die Abrechnung stehen dadurch alle Abrechnungsdaten zur Verfügung, und die Abrechnung kann durch den Netzbetreiber unmittelbar erfolgen oder durch den Diensteerbringer, dem der Netzbetreiber die Daten weitergibt.
10. Beendet der Teilnehmer oder der Anbieter/Diensterbringer den Dienst, so wird die Verbindung über den Netzknoten 17 wieder gelöst, was teilnehmerseitig das temporär installierte Programm durchführt, und der Browser auf offline gesetzt.
11. Die Verbindung 20 zum Server 16 wird wieder aufgebaut und der Browser wird aktiviert. Das insoweit nicht kostenpflichtige Internetsurfen kann seinen Fortgang nehmen.

Im Fall des Mobiltelefons 15 führt dieses die entsprechenden Vorgänge über die Schnittstellen bzw. Verbindungen 20', 21' durch.

## Patentansprüche

1. Verfahren zur telekommunikativen Lieferung von über das Internet (30) angeforderten kostenverursachenden Diensten durch einen Dienste-Erbringer oder einen dem Dienste-Erbringer assoziierten, eine Internetseite anbietenden Anbieter unter Identifizierung des anfordernden Teilnehmers durch den Dienste-Erbringer und individueller Abrechnung, wobei dem Teilnehmer eine Datenverarbeitungs- und Telekommunikationseinheit (14, 15) mit einem Programmsspeicher sowie, von dieser Einheit ausgehend, stehende oder durchschaltbare Verbindungen (20, 21; 20', 21') zu einem Internet-Server (16) und zu einem Telekommunikations-Netzknoten (17), der über eine durch Signalisierungen der durchgeleiteten Verbindungen ansteuerbare Tarifspeicher- und -rechenanlage (28) verfügt, zur Verfügung stehen; wobei man in den Programmspeicher des Teilnehmers ein Datenverarbeitungsprogramm einliest, das auf einen entsprechenden Befehl hin eine bestehende Verbindung (auf 20) zum Internet-Server (16) löst und eine Verbindung mit Abrechnungsautomatik über den Telekommunikations-Netzknoten (17) zum Erbringer (31a, 31b, ...; 24a, 24b, ...) des angeforderten Dienstes herstellt,
**dadurch gekennzeichnet, daß** für den Internetseiten-Anbieter (31a, 31b, ..) in der Tarifspeicher- und -rechenanlage (28) an Speicherstellen, die gegebenen Tarifsignalisierungen zugeordnet sind, individuelle Tarifdaten gespeichert worden sind; daß der Intemetseiten-Anbieter (31a, 31b, ...) auf die Anforderung des Dienstes hin über die bestehende Internetverbindung (20) in den Programmspeicher des Teilnehmers (14, 15) Daten überträgt, die einen über jenen Telekommunikations-Netzknoten (17) verlaufenden Telekommunikations-Pfad zum Dienste-Erbringer (24a, 24b, ...) oder zum Internetseiten-Anbieter (31a, 31b, ...) mit Hilfe einer diesem Erbringer oder Anbieter zugeordneten Wegeleitsignalisierung identifizieren, der jeweils eine gegebene Tarifsignalisierungen zum Adressieren der Tarifspeicher- und -rechenanlage (28) zugeordnet ist; daß das Programm die Anwahl dieses Erbringers (24a, 24b, ...) oder Anbieters (31a, 31b, ...) und der ihm zugeordneten Speicherstellen in der Tarifspeicher- und -rechenanlage (28) durch das Senden der gegebenen Signalisierungen durchführt; und daß die Tarifspeicher- und -rechenanlage (28) aufgrund der dem Telekommunikations-Netzknoten (17) zugegangenen Tarifsignalisierung die einem oder mehreren Kostenschuldnern zu berechnende Belastung ermittelt.

2. Verfahren nach Anspruch 1, **dadurch gekennzeichnet, daß** die Tarifsignalisierung und die Wegeleitsignalisierung die selbe Datenfolge, nämlich die Anwahlnummer des Dienste-Erbringers über den Telekommunikations-Netzknoten (17), ist.

3. Verfahren nach Anspruch 1 oder 2, **dadurch gekennzeichnet, daß** das Programm, das im Speicher von an der Teilnahme berechtigten Internetseiten-Anbietern (31a, 31b, ...) gespeichert ist und die Verbindungsdaten der vom Teilnehmer über den Netzknoten (17) zum Erbringer (31a, 31b, ...; 24a, 24b, ...) des angeforderten Dienstes herzustellenden Verbindung (21, 21', 22, 23) mit Abrechnungsautomatik enthält, durch Internet-Abruf vorübergehend in den Programmspeicher des Teilnehmers (14, 15) geladen wird, sich nach dem Laden sofort aktiviert und dadurch jene Verbindung herstellt, und sich nach dem Lösen der Verbindung wieder selbst im Programmspeicher des Teilnehmers löscht.

4. Verfahren nach Anspruch 1 oder 2, **dadurch gekennzeichnet, daß** der Teilnehmer am Bildschirm seiner Datenverarbeitungs- und Telekommunikationseinheit beim Betrachten einer Internetseite (1) zum Anfordern des Dienstes durch Anklicken eines gegebenen Schaltbereichs (2) auf der Internetseite ein Signal zum Intemetseiten-Anbieter (31a, 31b, ...) sendet.

5. Verfahren nach Anspruch 3 oder dem auf Anspruch 3 rückbezogenen Anspruch 4, **dadurch gekennzeichnet, daß** das Programm zwischen dem Lösen der anfänglichen Verbindung (20, 20') zum Internet-Server (16) und dem Beginn der zu errichtenden Verbindung (21, 21', 22, 23) mit Abrechnungsautomatik die Internetseite (1) offline aufrechterhält.

6. Verfahren nach Anspruch 3 oder nach einem der auf Anspruch 3 rückbezogenen Ansprüche 4 oder 5, **dadurch gekennzeichnet, daß** das Programm im Rahmen des Lösens der Verbindung (20, 20') zum Internet-Server (16) die Daten der Verbindung zum Internetseiten-Anbieter (31a, 31b, ...) speichert und später nach dem Lösen der Verbindung (21, 21', 22, 23) mit Abrechnungsautomatik über den Netzknoten (17) die anfängliche Verbindung (20, 20') über den Internet-Server (16) zum ursprünglichen Internetseiten-Anbieter (31a, 31b, ...) automatisch wiederherstellt.

7. Verfahren nach dem auf Anspruch 5 rückbezogenen Anspruch 6,
**dadurch gekennzeichnet, daß** das Programm zwischen dem Lösen der Verbindung (21, 21', 22, 23) mit Abrechnungsautomatik und der Wiederherstellung der Verbindung (20, 20') zum Internetseite-Anbieter (31a, 31b, ...) die ursprüngliche, durch das Programm gespeicherte Internetseite (1) offline wieder auf den Bildschirm bringt.

8. System zur telekommunikativen Lieferung von über das Internet (30) angeforderten Diensten durch einen Dienste-Erbringer (24a, 24b, ...), oder einen dem Dienste-Erbringer assoziierten, eine Internetseite anbietenden Anbieter (31a, 31b, ...) mit der Möglichkeit der Identifizierung des anfordernden Teilnehmers durch den Dienste-Erbringer, wobei dem Teilnehmer zur Verfügung stehen: eine Datenverarbeitungs- und Telekommunikationseinheit (14, 15) mit einem Programmspeicher, in den ein Datenverarbeitungsprogramm einlesbar ist, sowie von dieser Datenverarbeitungs- und Telekommunikationseinheit ausgehende stehende oder durchschaltbare Verbindungen (20, 21; 20', 21') einerseits zu einem Internet-Server (16) und andererseits zu einem Telekommunikations-Netzknoten (17), dem eine Tarifspeicher- und -rechenanlage (28) zugeordnet ist, wobei das einlesbare Datenverarbeitungsprogramm auf entsprechenden Befehl hin eine bestehende Verbindung (20) zum Internet-Server löst und eine Verbindung (21, 21', 22, 23) mit Abrechnungsautomatik über den Telekommunikations-Netzknoten (17) zum Erbringer (24a, 24b, ...; 31a, 31b, ...) des angeforderten Dienstes herstellt,
**dadurch gekennzeichnet, daß** das Programm: 1. im Speicher von an der Teilnahme berechtigten Internetseiten-Anbietern (31a, 31b, ...) oder von diesen beauftragten Programmservicezentren gespeichert ist, 2. es die Verbindungsdaten der vom Teilnehmer über den Netzknoten (17) zum Erbringer (24a, 24b, ...; 31a, 31b, ...) des angeforderten Dienstes herzustellenden Verbindung (21, 21a, 22, 23) mit Abrechnungsautomatik enthält, 3. es durch Internet-Abruf vorübergehend in den Speicher des Teilnehmers ladbar ist, und 4. es ein nach dem Laden sich sofort aktivierendes und dadurch jene Verbindung (21, 21', 22, 23) herstellendes Programm ist, das sich nach Beendigung der Verbindung im Speicher des Teilnehmers selbst wieder löscht; und daß die dem Netzknoten (17) zugeordnete Tarifspeicher- und -rechenanlage (28) durch die Verbindungsdaten der Verbindung (21, 21', 22, 23) mit Abrechnungsautomatik adressierbar ist und dazu programmiert ist, nach der Errichtung der Verbindung mit Abrechnungsautomatik einen vom jeweiligen Dienste-Erbringer (24a, 24b, ...; 31a, 31b, ...) vorgegebenen Abrechnungstarif mit Vorgabe des Zahlungspflichtigen - Teilnehmer und/oder Anbieter - anzuwenden.

9. System nach Anspruch 8, **dadurch gekennzeichnet, daß** der Teilnehmer an seiner Datenverarbeitungs- und Telekommunikationseinheit (14, 15) einen Bildschirm zum Betrachten einer Internetseite (1) hat und die vom Anbieter gelieferte Internetseite (1) einen Schaltbereich (2) aufweist, durch dessen Anklicken ein den Dienst anforderndes Signal zum Internetseiten-Anbieter (31a, 31b, ...) absendbar ist.

10. System nach Anspruch 8 oder 9, **dadurch gekennzeichnet, daß** das Programm eines ist, das beim Lösen der Verbindung (20, 20') zum Internet-Server (16) die Daten der Verbindung zum Internetseiten-Anbieter (31a, 31b, ...) speichert, zwischen dem Lösen der anfänglichen Verbindung (20, 20') zum Internet-Server und dem Beginn der zu errichtenden Verbindung (21, 21', 22, 23) mit Abrechnungsautomatik die Internetseite (1) offline aufrechterhält, später nach dem Auslösen der Verbindung (21, 21', 22, 23) mit Abrechnungsautomatik über den Netzknoten (17) die anfängliche Verbindung (20, 20') über den Internet-Server (16) zum ursprünglichen Internetseiten-Anbieter (31a, 31b, ...) automatisch wiederherstellt und zwischen dem Auslösen der Verbindung mit Abrechnungsautomatik und der Wiederherstellung der Verbindung zum Internetseite-Anbieter die ursprüngliche, durch das Programm gespeicherte Internetseite (1) offline wieder auf den Bildschirm bringt.
